# DEMANDE DE BREVET EUROPEEN

(11) **EP 1 775 950 A1**
(43) Date de publication de la demande: **18.04.2007**
(21) Numéro de dépôt: 05109449.8
(22) Date de dépôt: 11.10.2005
(51) Int. Cl.: H04N 7/167, H04N 5/00

(54) **Procédé de traitement de données à accès conditionnel et décodeur pour la mise en oeuvre de ce procédé**

(71) Demandeur: Nagravision S.A., 1033 Cheseaux-sur-Lausanne (CH)
(72) Inventeur: Brique, Olivier, 1802 Corseaux (CH); Kudelski, Henri, 1091 Grandvaux (CH); Fischer, Nicolas, 1290 Versoix (CH)
(74) Mandataire: Wenger, Joel-Théophile

(57) **Abrégé**

La présente invention concerne un procédé de traitement de données à accès conditionnel dans une unité multimédia comportant un décodeur en charge de recevoir au moins un message d'autorisation EMM, et un module de sécurité associé à ce décodeur, le module de sécurité étant au moins partiellement en charge des opérations cryptographiques requises pour accéder auxdites données à accès conditionnel, caractérisé en ce que le procédé comporte les étapes de :
- réception par le décodeur d'un message d'autorisation (EMM), ce message comprenant au moins un champ de filtrage (FF) et une première information de filtrage;
- lecture d'une valeur d'un paramètre propre à une unité multimédia;
- détermination d'au moins une plage de filtrage à partir de ladite première information de filtrage et dudit champ de filtrage;
- comparaison de ladite plage de filtrage avec au moins une partie de la valeur du paramètre propre à l'unité multimédia;
- transmission au module de sécurité des messages d'autorisation (EMM) dont la comparaison est positive
- traitement des données par ledit module de sécurité.

## Description

### DOMAINE TECHNIQUE

La présente invention concerne le domaine de l'accès à des données à accès conditionnel, plus particulièrement dans le cadre de la télévision à péage. De façon plus précise, elle concerne le traitement de messages reçus par une unité multimédia utilisée dans le cadre de l'accès aux données et le filtrage des messages qui sont destinés à une partie des unités multimédia auxquelles les messages sont envoyés.

Elle concerne également un décodeur agencé pour permettre la mise en oeuvre du procédé de l'invention.

### TECHNIQUE ANTERIEURE

De façon bien connue, pour pouvoir accéder à des données chiffrées et visionner un événement de télévision à péage, tel qu'un film, un événement sportif ou un jeu notamment, plusieurs flux sont diffusés à destination d'un ensemble d'unités multimédia formées d'un décodeur et d'un module de sécurité. Ces flux sont notamment d'une part le fichier de l'événement sous forme d'un flux de données chiffrées et d'autre part, un flux de messages de contrôle ECM permettant le déchiffrement du flux de données. Le contenu du flux de données est chiffré par des "mots de contrôle" (Control words = CW), renouvelés régulièrement. Le deuxième flux est appelé flux ECM (Entitlement Control Message) et peut être formé notamment de deux manières différentes. Selon une première manière, les mots de contrôle sont chiffrés par une clé, dite clé de transmission TK, qui est généralement propre au système de transmission entre le centre de gestion et un module de sécurité associé au récepteur/décodeur. Le mot de contrôle CW est obtenu en déchiffrant les messages de contrôle ECM au moyen de la clé de transmission TK.

Selon une deuxième manière, le flux ECM ne contient pas directement les mots de contrôle chiffrés, mais contient des informations permettant de déterminer les mots de contrôle. Cette détermination des mots de contrôle peut se faire par différentes opérations, en particulier par déchiffrement, ce déchiffrement pouvant aboutir directement au mot de contrôle, ce qui correspond à la première manière décrite ci-dessus, mais le déchiffrement pouvant également aboutir à une donnée qui contient le mot de contrôle, celui-ci devant encore être extrait de la donnée. En particulier, la donnée peut contenir le mot de contrôle ainsi qu'une valeur associée au contenu à diffuser, et notamment les conditions d'accès à ce contenu. Une autre opération permettant la détermination du mot de contrôle peut utiliser par exemple une fonction de hachage à sens unique de cette information notamment.

Les opérations de sécurité sont généralement effectuées dans le module de sécurité associé au décodeur. Un tel module de sécurité peut être réalisé en particulier selon quatre formes distinctes. L'une d'elles est une carte à microprocesseur, une carte à puce, ou plus généralement un module électronique (ayant une forme de clé, de badge,...). Un tel module est généralement amovible et connectable au décodeur. La forme avec contacts électriques est la plus utilisée, mais n'exclu pas une liaison sans contact par exemple de type ISO 14443.

Une deuxième forme connue est celle d'un boîtier de circuit intégré placé, généralement de façon définitive et inamovible dans le boîtier du décodeur. Une variante est constituée d'un circuit monté sur un socle ou connecteur tel qu'un connecteur de module SIM.

Dans une troisième forme, le module de sécurité est intégré dans un boîtier de circuit intégré ayant également une autre fonction, par exemple dans un module de désembrouillage du décodeur ou le microprocesseur du décodeur.

Dans une quatrième forme de réalisation, le module de sécurité n'est pas réalisé sous forme matérielle, mais sa fonction est mise en oeuvre sous forme uniquement logicielle. Etant donné que dans les quatre cas, bien que le niveau de sécurité diffère, la fonction est identique, on parlera de module de sécurité quelle que soit la manière de réaliser sa fonction ou la forme que peut prendre ce module.

Lors du déchiffrement d'un message de contrôle ECM, il est vérifié, dans le module de sécurité, que le droit pour accéder au contenu considéré est présent. Ce droit peut être géré par des messages d'autorisation EMM (Entitlement Management Message) qui chargent un tel droit dans le module de sécurité.

La diffusion de données numériques à accès conditionnel est schématiquement divisée en trois modules. Le premier module est en charge du chiffrement des données numériques par les mots de contrôle CW et de la diffusion de ces données.

Le deuxième module prépare les messages de contrôle ECM contenant les mots de contrôle CW, ainsi que les conditions d'accès et les diffuse à l'intention des utilisateurs.

Le troisième module quant à lui prépare et transmet les messages d'autorisation EMM qui sont en charge de définir les droits de réception dans les modules de sécurité connectés aux récepteurs.

Alors que les deux premiers modules sont généralement indépendants des destinataires, le troisième module gère l'ensemble des utilisateurs et diffuse des informations à l'intention d'un utilisateur, d'un groupe d'utilisateurs ou de tous les utilisateurs.

Pour envoyer des informations telles que des droits, des résiliations de droits ou des commandes à un utilisateur spécifique, un groupe d'utilisateur ou tous les utilisateurs, trois formats de messages d'autorisation EMM sont prévus. Il s'agit des messages d'autorisation uniques EMM-U, destiné à un utilisateur spécifique, des messages d'autorisation partagés EMM-S destinés à un groupe d'utilisateurs et des messages d'autorisation globaux EMM-G, destinés à tous les utilisateurs.

De façon générale, les messages reçus par un décodeur sont transmis à au moins un filtre, permettant par exemple de trier les messages selon leur type. Un tel filtre se base sur trois paramètres, à savoir la longueur du filtre, la valeur du filtre et un masque. Lorsque le décodeur reçoit un message sous forme de paquet, il filtre tout d'abord ce paquet sur la base des trois paramètres.

Dans les décodeurs existants, ces filtres sont des filtres matériels configurés de façon logicielle. La configuration de ces filtres permet de définir la manière de filtrer les messages reçus. Cette configuration reste inchangée jusqu'à ce qu'une nouvelle configuration soit introduite. En particulier, les filtres ont une longueur fixée de sorte que s'il est par exemple nécessaire de filtrer des messages sur des longueurs de 8, 16 et 24 bits, il est nécessaire d'utiliser trois filtres différents. Ceci implique qu'il n'y a pas de souplesse au niveau du filtrage, puisqu'il n'est pas simple de modifier les paramètres. Ceux-ci ne peuvent en particulier pas être modifiés pour chaque message.

Actuellement, de nombreuses commandes qui, par définition, ne sont pas destinées à tous les utilisateurs, par exemple des commandes de "black out", sont envoyées sous forme de messages d'autorisation globaux EMM-G parce que cette manière est la plus économique en terme de ressources nécessaires, et notamment en terme de bande passante.

Par définition dans les systèmes actuels, lorsqu'un décodeur reçoit un message d'autorisation global EMM-G, il doit le transmettre au module de sécurité. Celui-ci doit donc traiter le message. Le module de sécurité le décrypte de façon à obtenir son contenu en clair. Une fois décrypté, si le message ne concerne pas le module de sécurité ou le décodeur en question, le traitement de ce message est arrêté.

De nombreux messages envoyés sous forme de messages d'autorisation globaux EMM-G ne concernent en fait qu'une faible quantité des modules de sécurité en circulation. De ce fait, ces modules traitent une grande quantité de données qui ne les concernent pas.

A titre d'exemple concret, sur une quantité de 14'000 commandes qui peuvent être transmises dans les airs un jour donné sous forme de messages d'autorisation globaux EMM-G, seuls environ 7 commandes concernent réellement un module de sécurité déterminé. Comme tous les messages d'autorisation globaux EMM-G sont déchiffrés par le module de sécurité, celui-ci effectue énormément de travail inutile.

### EXPOSE DE L'INVENTION

La présente invention se propose de réaliser une méthode permettant de diminuer la quantité de messages d'autorisation globaux que chaque module de sécurité doit traiter, en éliminant au moins une partie des messages d'autorisation qui ne concernent pas ce module de sécurité, tout en conservant bien entendu tous les messages d'autorisation qui concernent le module.

La présente invention se propose en outre de réaliser un décodeur qui soit en mesure d'éliminer une partie des messages d'autorisation qui ne le concerne pas et qui ne concernent pas le module de sécurité auquel il est associé.

Le but de l'invention est atteint par un procédé de traitement de données à accès conditionnel dans une unité multimédia comportant un décodeur en charge de recevoir au moins un message d'autorisation EMM, et un module de sécurité associé à ce décodeur, le module de sécurité étant au moins partiellement en charge des opérations cryptographiques requises pour accéder auxdites données à accès conditionnel, caractérisé en ce que le procédé comporte les étapes de :
- réception par le décodeur d'un message d'autorisation EMM, ce message comprenant au moins un champ de filtrage (FF) et une première information de filtrage;
- lecture d'une valeur d'un paramètre propre à une unité multimédia;
- détermination d'au moins une plage de filtrage à partir de ladite première information de filtrage et dudit champ de filtrage;
- comparaison de ladite plage de filtrage avec au moins une partie de la valeur du paramètre propre à l'unité multimédia;
- transmission au module de sécurité des messages d'autorisation (EMM) dont la comparaison est positive
- traitement des données par ledit module de sécurité.

Le but de l'invention est également atteint par un décodeur destiné à coopérer avec un module de sécurité formant une unité multimédia, ce décodeur comportant des moyens de réception de messages d'autorisation, des moyens d'extraction d'une première information de filtrage dudit message d'autorisation et une première information de filtrage, des moyens de lecture d'un paramètre propre à l'unité multimédia, des moyens de détermination d'au moins une plage de filtrage à partir de ladite première information de filtrage et dudit champ de filtrage, des premiers moyens de comparaison de ladite première information de filtrage avec une partie de la valeur du paramètre, et des moyens pour transmettre ce message au module de sécurité si la comparaison est positive.

Selon la présente invention, la solution proposée consiste à envoyer un message d'autorisation EMM contenant des informations dont une partie est déchiffrable directement par le décodeur, sans passer par le module de sécurité, ces informations étant utilisées pour filtrer les messages reçus avant leur éventuelle transmission au module de sécurité.

De cette manière, lorsqu'un message d'autorisation est reçu par une unité multimédia, le décodeur lui-même effectue un premier tri, sur la base d'un filtre contenu dans la partie du message déchiffrable par le décodeur. Si le message ne passe pas ce premier filtre, il n'est simplement pas transmis au module de sécurité.

Si au contraire, le message passe le premier filtre, il est transmis au module de sécurité avec éventuellement un passage par un deuxième filtre plus fin au niveau du décodeur. Le module de sécurité déchiffre ensuite le message de façon conventionnelle. Une fois que le contenu du message est déchiffré, le module de sécurité est en mesure de déterminer si le message le concerne réellement. Si oui, il est traité de façon conventionnelle, sinon, il est éliminé.

Les informations placées dans le message d'autorisation et déchiffrables par le décodeur définissent au moins une information, qui peut être une borne ou une caractéristique à partir de laquelle le premier filtrage est effectué. Le message d'autorisation contient également une indication d'un paramètre sur lequel ce filtrage doit être effectué et d'une manière d'effectuer ce filtrage. Ce paramètre peut par exemple être un numéro d'identification du module de sécurité ou un code postal auquel est rattachée l'unité multimédia. La manière d'effectuer le filtrage peut par exemple indiquer que celui-ci doit être effectué entre deux bornes ou à partir d'une borne et d'un critère de sélection par exemple. D'autres manières de filtrer pourraient également être utilisés, comme par exemple le fait que le numéro d'identification du module de sécurité soit pair.

### DESCRIPTION SOMMAIRE DES DESSINS

La présente invention et ses avantages seront mieux compris en référence aux figures annexées et à la description détaillée de modes de réalisation particuliers, dans lesquelles :
- la figure 1 représente la structure particulière d'un message d'autorisation EMM utilisé dans la méthode de l'invention;
- les figures 2 à 6 illustrent des variantes de réalisation d'un message d'autorisation EMM utilisé dans la méthode de l'invention;
- la figure 7 représente schématiquement le procédé de l'invention.

### MANIERES DE REALISER L'INVENTION

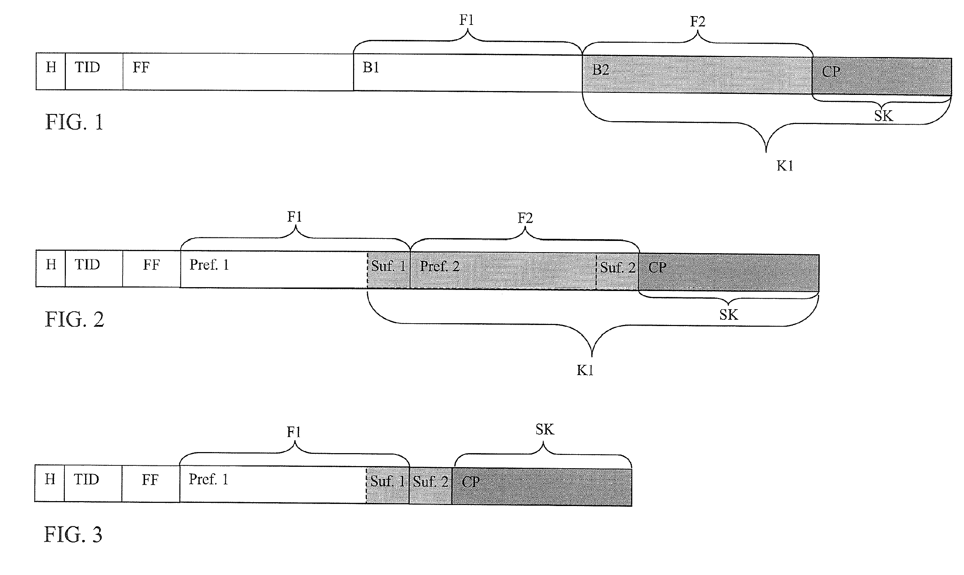

Selon les figures 1 à 5, le procédé de l'invention utilise un message d'autorisation EMM qui contient un en-tête H, un identifiant de critère de filtrage TID, un champ de filtrage FF, une première information de filtrage F1, une seconde information de filtrage F2 et une partie de commande CP. La partie de commande peut contenir par exemple un droit, une résiliation de droit ou une commande à destination du décodeur notamment. Elle peut également contenir des valeurs spécifiques du critère de filtrage, ces valeurs spécifiques définissant en dernier lieu à qui s'adressent exactement les messages d'autorisation.

La figure 1 représente un exemple dans lequel on envoie une commande de black out basée sur un code postal auquel est liée l'unité multimédia.

A titre d'exemple, imaginons que l'on souhaite envoyer cette commande de black out à toutes les unités multimédia dont le code postal est compris entre 12346 et 12400. Le code postal est codé par exemple sur une longueur de 32 bits, cette longueur étant normalisée.

On forme le message d'autorisation EMM en y introduisant tout d'abord l'en-tête H qui indique le type de message, puis l'identifiant de critère de filtrage TID qui définit le paramètre de filtrage et le mode de filtrage à effectuer. On introduit ensuite le champ de filtrage FF. Dans le cas illustré par cet exemple, le champ de filtrage contient un certain nombre de 1 pour les bits de poids fort et des zéros pour les bits de poids faible, la limite entre les bits de poids fort et faible étant définie de la manière expliquée ci-dessous.

On introduit ensuite dans ce message d'autorisation EMM, la première information de filtrage F1, qui, dans l'exemple considéré est une borne inférieure d'un intervalle de filtrage, et la seconde information de filtrage F2 qui est une borne supérieure de l'intervalle considéré.

Le masque de filtrage contenu dans le champ de filtrage FF est définit de la manière suivante :
On convertit tout d'abord les bornes de l'intervalle de filtrage en valeurs binaires, ces valeurs ayant la longueur totale normalisée, à savoir 32 bits dans le cas présent. Dans l'exemple choisi, on a :
   12346 = 0000 0000 0000 0000 0011 0000 0011 1010
   12400 = 0000 0000 0000 0000 0011 0000 0111 0000
On détermine ensuite la partie commune entre ces deux valeurs, c'est-à-dire les bits qui sont identiques dans les deux bornes, en commençant par les bits de poids fort, jusqu'à la première différence relevée.

La partie commune entre ces deux bornes, est 0000 0000 0000 0000 0011 0000 0. Elle a une longueur de 25 bits.

Dans ce cas, le masque de filtrage sera défini par 25 bits de poids fort égaux à 1 et 7 bits de poids faible égaux à 0. La longueur de 25 bits est définie par la longueur de la partie commune des bornes et la longueur de 7 bits est définie de façon à obtenir une longueur totale normalisée, à savoir 32 bits dans l'exemple choisi.

Le message d'autorisation contient en outre, de façon conventionnelle, une partie de commande CP, qui peut inclure des droits, une résiliation provisoire ou définitive, une commande a destination du décodeur, un identifiant de décodeurs spécifiques, etc.

Selon un premier mode de réalisation, illustré par la figure 1, la valeur de la borne inférieure correspond à la première information de filtrage.

Dans le message d'autorisation schématiquement illustré par la figure 1, la première information de filtrage B1 est en clair. Au contraire, la seconde information de filtrage B2 est chiffrée au moyen d'une clé commune à un grand nombre d'unités multimédia, ce qui permet d'envoyer le message d'autorisation sous forme globale. Cette clé peut être mémorisée dans le décodeur ou dans le module de sécurité.

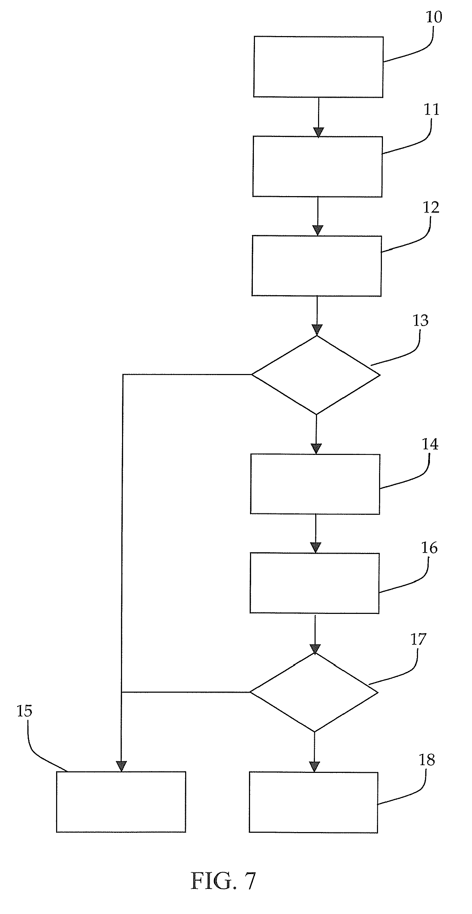

Le fonctionnement du procédé de l'invention est expliqué en détail ci-dessous, en référence aux figures 1 et 7.

Lorsqu'une unité multimédia reçoit un message d'autorisation EMM selon le format décrit ci-dessus en référence à la figure 1, comme cela est illustré par une étape portant la référence 10 sur la figure 7, il détermine tout d'abord, grâce à l'en-tête H qu'il s'agit d'un message d'autorisation EMM.

En se basant sur le mode de réalisation de la figure 1, le décodeur obtient l'identifiant de critère de filtrage TID qui va lui indiquer comment traiter le message. Le décodeur reçoit également le masque contenu dans le champ de filtrage ainsi que la première information de filtrage.

Dans l'étape portant la référence 11 sur la figure 7, on applique le masque à la première information de filtrage.

Dans l'exemple choisi, l'identifiant de critère TID indique que le filtrage doit se faire pour tous les décodeurs dont le code postal est compris entre la borne inférieure et la borne supérieure et que le masque est formé de 25 bits égaux à 1 suivis de 7 bits égaux à 0.

L'étape suivante 12 consiste à générer une plage de valeurs correspondant au filtrage effectué dans le décodeur. Pour ceci, la première information de filtrage est associée au masque par exemple au moyen d'une fonction AND. En appliquant cette fonction AND au masque et à la première information de filtrage, on obtient :
Mask = 1111 1111 1111 1111 1111 1111 1000 0000
B1 = 0000 0000 0000 0000 0011 0000 0011 1010
AND 0000 0000 0000 0000 0011 0000 0000 0000 (=12'288)

L'étape suivant 13 consiste à tester si l'unité multimédia peut être concernée par le message reçu, en fonction de la plage de valeurs déterminée dans l'étape précédente.

Pour ceci, on détermine la valeur du paramètre sur lequel se fait le filtrage, cette valeur étant mémorisée dans le décodeur. On tronque ensuite cette valeur à une longueur correspondant au nombre de 1 contenus dans le masque. Dans l'exemple considéré, le code postal, codé sur 32 bits, est tronqué aux 25 premiers bits de poids fort. La comparaison est alors faite entre d'une part la partie tronquée de la valeur du paramètre de filtrage et d'autre part, le résultat de la fonction AND appliquée au masque et à la première information de filtrage.

Le décodeur effectuera un premier filtrage sur la base des 25 premiers bits correspondant au résultat de la fonction AND sur le masque et la première information de filtrage, cette partie commune étant, dans l'exemple mentionné précédemment, égale à 0000 0000 0000 0000 0011 0000 0.

Ensuite, le décodeur vérifiera si la partie tronquée du code postal pour lequel il est enregistré est égal à la valeur obtenue par l'application du masque à la première information de filtrage. Seuls les décodeurs répondant à ce critère transmettront le message d'autorisation au module de sécurité qui leur est associé, au cours de l'étape référencée 14. Les autres décodeurs ne transmettrons pas le message plus loin, ce qui schématisé par l'étape 15.

Selon une variante de l'étape portant la référence 13, il est également possible de générer des bornes de filtrage pour le paramètre. Comme le code postal comprend 32 bits, ce filtrage sur la base de 25 bits de poids fort donnera tous les codes postaux compris entre
0000 0000 0000 0000 0011 0000 0 000 0000 et
0000 0000 0000 0000 0011 0000 0 111 1111
c'est-à-dire entre 12'288 et 12'415. Les 25 premiers bits des bornes ainsi créées correspondent au résultat de la fonction AND appliqué au masque et à la première information de filtrage. Les 7 derniers bits sont tous égaux à 10 pour la borne inférieure et tous égaux à 1 pour la borne supérieure.

Le module de sécurité, qui dispose d'une clé K1 ayant servi à chiffrer la seconde information de filtrage, ou dans l'exemple considéré, la borne supérieure, déchiffre ensuite ce message lors de l'étape 16, de façon à obtenir la valeur exacte des bornes inférieure et supérieure.

Le module de sécurité effectue ensuite une vérification lors de l'étape 17, non-pas sur la base des 25 premiers bits des codes postaux, mais sur la totalité de la longueur, à savoir 32 bits. Les bornes de l'intervalle seront donc réellement 12'346 et 12'400 et non-plus 12'288 et 12'415 comme c'était le cas pour le décodeur.

Si l'unité multimédia est bien liée à un code appartenant à cet intervalle, la partie de commande CP est déchiffrée et la commande placée dans la partie de commande du message d'autorisation est exécutée de façon conventionnelle lors d'une étape 18. Cette commande permet par exemple d'interdire l'accès à un événement particulier pour les unités multimédia dont le code postal est contenu entre les bornes indiquées dans le message d'autorisation. Si l'unité multimédia ne fait pas partie de ce groupe, la partie de commande n'est pas déchiffrée et la commande n'est pas exécutée.

La figure 2 illustre une variante du mode de réalisation de la figure 1. Dans cette variante, le masque de la figure 1 est remplacé par un champ indiquant uniquement le nombre de 1 contenus dans le masque, ou en d'autres termes, la longueur du masque.

Dans l'exemple considéré précédemment, cette longueur de masque est de 25 bits. Le champ indiquant la longueur contient donc uniquement la valeur 25, soit 11001 en binaire.

Ce mode de réalisation est avantageux par le fait que la place nécessaire pour coder la longueur est plus restreinte que la place pour coder le masque lui-même.

Le message d'autorisation EMM tel qu'illustré par la figure 2 diffère de celui de la figure 1 par un autre élément, indépendant de la différence mentionnée précédemment. La borne inférieure est séparée en deux parties. La première partie a une longueur égale au nombre de bits égaux à 1 dans le masque ou à la longueur du masque, soit 25 bits dans l'exemple choisi. La deuxième partie à la longueur restante soit 7 bits dans cet exemple. La concaténation de la première et de la deuxième partie donne la borne inférieure. La première partie de la borne correspondant à la première information de filtrage. Dans le mode de réalisation illustré, la première information de filtrage est en clair alors que la deuxième partie de la borne est chiffrée.

Dans le procédé de l'invention, lorsque le premier filtrage doit être effectué par le décodeur, on détermine la longueur du filtre dans le champ correspondant du message d'autorisation, puis on applique ce filtre à la suite du message. On obtient ainsi la première information de filtrage qui permettra au décodeur de déterminer s'il peut être concerné par le message reçu. Il est à noter que, du fait que rien ne distingue la première information de filtrage de la partie restante de la borne, il est nécessaire d'avoir une information indiquant sur quelle longueur de message, le filtrage doit être effectué. Cette information peut être donnée par le masque ou par l'indication de la longueur du filtre.

Dans le mode de réalisation illustré par la figure 2, la borne supérieure est également illustrée comme étant scindée en deux parties. La première partie Pref. 2 à une longueur égale au nombre de 1 contenus dans le masque de filtrage ou la longueur du filtre. Cette première partie est égale à la partie commune entre les deux bornes de filtrage, de sorte qu'elle est égale à la première information de filtrage. La deuxième partie est telle que la concaténation de la première et de la deuxième partie donne la borne supérieure. Celle-ci peut être en clair, mais elle est généralement chiffrée.

Il est à noter qu'en principe, la première information de filtrage ou la première partie de la borne inférieure est égale à la première partie de la borne supérieure puisque ces deux valeurs ont été formées par la partie commune entre ces deux bornes. En pratique, il est donc possible de remplacer le préfixe Pref. 2 par une valeur quelconque, par exemple une suite de 0 ou de 1 ou une valeur aléatoire de la longueur désirée. Dans ce cas, la borne supérieure est formée de la concaténation de la première valeur de filtrage Pref. 1 avec le deuxième suffixe Suf. 2.

Dans l'exemple des figures 1 et 2 ci-dessus, la longueur des champs contenant les bornes inférieure et supérieure est fixe et, mis à part éventuellement la partie de commande CP, tout le reste du message d'autorisation EMM a donc une longueur constante.

Dans les systèmes qui sont en mesure de traiter des messages d'autorisation de longueur variable, il est possible d'utiliser des messages tels qu'illustrés par les figures 3 à 5. Dans le cas de la figure 3, la borne inférieure est identique au cas de la figure 2. Cette borne est composée d'une première information de filtrage Pref. 1 et d'un suffixe de filtrage Suf. 1.

La borne supérieure diffère du cas de la figure 2 par le fait que seule la deuxième partie de la borne, nommée suffixe de filtrage Suf. 2 est transmise et non pas la première partie de cette borne. La borne supérieure du filtrage est formée de la concaténation de la première valeur de filtrage Pref. 1 et du deuxième suffixe de filtrage Suf. 2.

Le procédé de l'invention fonctionne comme dans le cas du message de la figure 1.

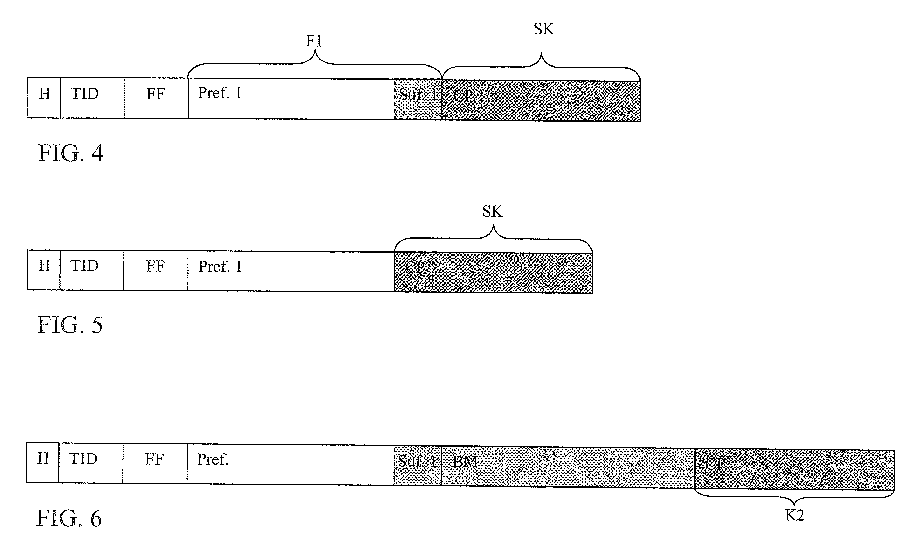

La figure 4 représente un exemple dans lequel seule la borne inférieure, c'est-à-dire la première information de filtrage et le premier suffixe de filtrage Suf. 1 sont transmis dans la partie en clair du message.

Le premier filtrage au niveau du décodeur est réalisé sur la base de la première information de filtrage. Si le message passe ce premier filtre et qu'il est envoyé au module de sécurité, la partie de commande CP du message pourra être déchiffrée. Dans le cas de la figure 4, cette partie de commande contient des informations permettant de déterminer si le décodeur ou le module de sécurité ayant reçu ce message sont réellement concernés.

La figure 5 représente un exemple dans lequel seule la première information de filtrage est envoyée dans la partie en clair du message. Comme dans le cas de la figure 4, le premier filtrage au niveau du décodeur se fait sur la première valeur de filtrage. Si le message passe ce premier filtre, la partie de commande, qui doit contenir une indication permettant de déterminer si le décodeur ou le module de sécurité sont concernés par le message, cette partie de commande pourra être déchiffrée. Le message sera ensuite traité de façon conventionnelle.

Selon l'exemple réel mentionné précédemment, dans lequel on a environ 14'000 commandes dans les airs sous la forme de messages d'autorisation généraux EMM-G, la méthode de l'invention permet de ne transmettre à chaque module de sécurité qu'environ 70 messages. Parmi ceux-ci, environ 7 commandes sont réellement destinées à chaque module de sécurité.

La figure 6 illustre un autre exemple de réalisation du procédé selon l'invention. Dans cet exemple, on n'utilise pas deux bornes pour définir l'intervalle, mais une borne et un ensemble de bits de sélection ou bitmap.

En référence à cette figure, prenons un exemple dans lequel on souhaite transmettre une commande à toutes les unités multimédia associées aux numéros postaux 34639, 34642, 34653 et 34667.

Comme précédemment, le message d'autorisation comprend un en-tête H et un identifiant de critère de filtrage TID qui défini le paramètre sur la base duquel le filtrage est effectué, de même que le type de filtrage à effectuer. Le message d'autorisation EMM contient en outre la longueur du filtre ainsi que la borne inférieure de l'intervalle, à savoir 34639 = 0000 0000 0000 0000 1000 0111 0100 1111.

Le message d'autorisation ne contient pas la borne supérieure, comme dans l'exemple précédent, mais un ensemble de bits de sélection ou bitmap BM. Ce bitmap est défini en attribuant une valeur de 1 pour chaque code postal présent dans la liste des codes postaux à qui on souhaite transmettre une commande, et un 0 à tous les autres. La longueur de ce bitmap est égale à la longueur du code postal codé en binaire, c'est-à-dire 32 bits.

Comme on veut envoyer la commande aux unités multimédia ayant le code postal 34639, le bitmap contient un 1 comme premier bit. Le code postal suivant, 34640 n'est pas concerné, le bitmap contient donc un 0 comme deuxième bit. Le troisième bit, correspondant au code postal 34641 est également nul, alors que le 4^{ème} bit, correspondant au code postal 34642 est égal à 1 puisque ce code postal est concerné par la commande envoyée dans le message d'autorisation EMM.

En procédant ainsi, on obtient le bitmap suivant :
BM = 1001 0000 0000 0010 0000 0000 0000 1000
où les 1 correspondent, de gauche à droite, aux codes postaux 34639, 34642, 34653 et 34667.

Cette valeur du bitmap est introduite dans le message d'autorisation EMM.

La longueur du filtre est déterminée comme dans les exemples précédents en comparant la partie commune entre la borne inférieure et la borne supérieure, soit entre
34'639 = 0000 0000 0000 0000 1000 0111 0100 1111
34'667 = 0000 0000 0000 0000 1000 0111 0110 1011
qui est 0000 0000 0000 0000 1000 0111 01.

Cette partie commune a une longueur de 26 bits. La longueur du filtre est donc de 26 bits.

Comme précédemment, lorsque le décodeur reçoit un message d'autorisation EMM, il traite tout d'abord l'identifiant de critère pour déterminer quel mode de filtrage il doit utiliser. Il détermine ensuite la longueur du filtre d'après le contenu du champ noté Flen. Dans l'exemple, cette longueur est de 26 bits. Le filtre doit donc tenir compte des 26 premiers bits contenus dans le premier champ de filtrage, c'est-à-dire des 26 premiers bits de la borne inférieure de l'intervalle. Ainsi, le décodeur filtrera les messages d'autorisation et transmettra au module de sécurité ceux dont le code postale est compris entre
0000 0000 0000 0000 1000 0111 01 00 0000 = 34'624
0000 0000 0000 0000 1000 0111 01 11 1111 = 34'687
ce qui correspond respectivement aux 26 premiers bits de la borne inférieure suivis de six 0 et à ces 26 premiers bits suivis de six 1.

Les messages remplissant ces critères seront transmis au module de sécurité pour traitement alors que tous les autres messages ne seront pas transmis.

Le bitmap est ensuite appliqué de façon à sélectionner les unités multimédia réellement concernées par le message.

Si le bitmap est uniquement chiffré par la clé système, le décodeur en aura le contenu dès qu'il aura déchiffré le message d'autorisation avec sa clé. Si au contraire, le bitmap est chiffré avec une clé K1 connue du module de sécurité, celui-ci devra tout d'abord traiter les messages qu'il reçoit du décodeur avant de déterminer si réellement ce message concerne l'unité multimédia considérée ou non. La partie de commande peut être chiffrée au moyen de cette même clé K1 ou au contraire au moyen d'une autre clé K2, également connue du module de sécurité.

## Revendications

1. Procédé de traitement de données à accès conditionnel dans une unité multimédia comportant un décodeur en charge de recevoir au moins un message d'autorisation (EMM), et un module de sécurité associé à ce décodeur, le module de sécurité étant au moins partiellement en charge des opérations cryptographiques requises pour accéder auxdites données à accès conditionnel, **caractérisé en ce que** le procédé comporte les étapes de :
- réception par le décodeur d'un message d'autorisation (EMM), ce message comprenant au moins un champ de filtrage (FF) et une première information de filtrage;
- lecture d'une valeur d'un paramètre propre à une unité multimédia;
- détermination d'au moins une plage de filtrage à partir de ladite première information de filtrage et dudit champ de filtrage;
- comparaison de ladite plage de filtrage avec au moins une partie de la valeur du paramètre propre à l'unité multimédia;
- transmission au module de sécurité des messages d'autorisation (EMM) dont la comparaison est positive
- traitement des données par ledit module de sécurité.

2. Procédé de traitement de données selon la revendication 1, **caractérisé en ce que** ledit champ de filtrage est un masque de filtrage.

3. Procédé de traitement de données selon la revendication 1, **caractérisé en ce que** ledit champ de filtrage est une longueur de filtre.

4. Procédé de traitement de données selon la revendication 1, **caractérisé en ce que** le message d'autorisation (EMM) comprend des premières informations complémentaires de filtrage (Suf. 1; BM) définissant, avec ladite première information de filtrage (Préf. 1), un second intervalle pour la comparaison avec le paramètre propre à l'unité multimédia.

5. Procédé de traitement de données selon la revendication 1, **caractérisé en ce que** le message comprend des premières informations complémentaires de filtrage qui associées à la première information de filtrage ont une longueur égale à la longueur du paramètre et définissent une borne d'un second intervalle pour la comparaison avec le paramètre propre à l'unité multimédia.

6. Procédé de traitement de données selon les revendications 4 à 5, **caractérisé en ce que** le message d'autorisation (EMM) comprend des secondes informations complémentaires de filtrage qui associées à la première information de filtrage définissent une borne d'un second intervalle pour la comparaison avec le paramètre propre à l'unité multimédia.

7. Procédé de traitement de données selon la revendication 6, **caractérisé en ce que** les secondes informations complémentaires de filtrage ne comprennent que les informations qui, en combinaison avec ladite première information de filtrage, définissent l'autre borne de l'intervalle pour la comparaison avec ledit paramètre propre à l'unité multimédia.

8. Procédé de traitement de données selon la revendication 4, **caractérisé en ce que** lesdites premières informations complémentaires de filtrage (BM) définissent un ensemble d'informations, chaque information étant propre à une valeur du paramètre compris dans l'intervalle définit par la première information de filtrage.

9. Procédé de traitement de données selon l'une quelconque des revendications précédentes, **caractérisé en ce que** le message d'autorisation (EMM) comprend un identifiant de critère de filtrage (TID) indiquant le paramètre sur lequel se fait le filtrage et la méthode de traitement à utiliser pour le filtrage.

10. Décodeur destiné à coopérer avec un module de sécurité formant une unité multimédia, ce décodeur comportant des moyens de réception de messages d'autorisation (EMM), des moyens d'extraction d'une première information de filtrage dudit message d'autorisation (EMM) et une première information de filtrage (Pref. 1), des moyens de lecture d'un paramètre propre à l'unité multimédia, des moyens de détermination d'au moins une plage de filtrage à partir de ladite première information de filtrage et dudit champ de filtrage, des premiers moyens de comparaison de ladite première information de filtrage (Pref. 1) avec une partie de la valeur du paramètre, et des moyens pour transmettre ce message au module de sécurité si la comparaison est positive.

11. Décodeur selon la revendication 10, **caractérisé en ce qu'**il comporte des deuxièmes moyens de comparaison agencés pour comparer ledit paramètre propre de l'unité multimédia avec la valeur réelle du paramètre contenue dans le message d'autorisation (EMM).

12. Décodeur selon la revendication 10, **caractérisé en ce qu'**il comporte des moyens pour reconstituer des bornes d'un intervalle à partir de ladite première information de filtrage et des moyens de filtrage de messages d'autorisation (EMM) à partir desdites bornes de l'intervalle.
